# EUROPEAN PATENT APPLICATION

(11) **EP 1 785 031 A1**
(43) Date of publication of application: **16.05.2007**
(21) Application number: 06123878.8
(22) Date of filing: 10.11.2006
(51) Int. Cl.: A01M 1/14, A01M 1/04

(54) **Apparatus for attracting and eliminating insects**

(30) Priority: 14.11.2005 CN 200520067384 U
(71) Applicant: Miao, Shengjiang, 570125 Haikou, Hainan (CN); Chow, James, Taiwan (TW); Wen, Chunghsiang, Taiwan (TW); Ma, Yuhan, Taiwan (TW)
(72) Inventor: Miao, Shengjiang, 570125, Haikou, Hainan (CN); Chow, James, 220, Taipei Hsine, Taiwan (TW)
(74) Representative: Hudy, Ludwik

(57) **Abstract**

Taught herein are solar-panel powered apparatuses for attracting and eliminating insects comprising a frame (6,9); means for attracting insects (8,11), said means for attracting insects being mechanically connected to said frame; means for trapping insects (4); a battery; and one or more solar panels (23). The apparatuses provide the advantages of efficient attracting and eliminating insects, low or no environmental pollution, and low cost.

## Description

The invention relates to an apparatus for attracting and eliminating insects, and more particularly to a powered apparatus for attracting and eliminating insects.

It is desirable to eliminate insects causing damage to crops from areas where high-priced crops (e.g., certain types of vegetables, fruits, flowers, tobacco and medicinal plants) are cultivated. In general, insecticides are used for this task. However, when sprayed onto crops insecticides pollute the environment, are expensive to use, and are not always effective. In addition, insecticides are toxic to humans.

Alternative methods of eliminating insects are known, including attracting insects with light and trapping or electrocuting. However, the use of light in eliminating insects from cropland has heretofore been limited because of the high expense for providing the electricity needed to operate insect light traps to vast crop growing areas.

In certain aspects the invention provides an apparatus for attracting and eliminating insects, which resolves the limitations of existing technologies, prevents pollution and other problems associated with the use of pesticides, and avoids the shortcomings associated with conventional insect light attraction methods.

In certain embodiments of the present invention provided is a solar-panel powered apparatus for attracting and eliminating insects comprising a frame; means for attracting insects, said means for attracting insects being mechanically connected to said frame; means for trapping insects; a battery; and one or more solar panels.

In certain embodiments, the apparatus further comprises a control circuit.

In certain embodiments, the control circuit comprises a microprocessor; a comparison circuit; a timing circuit; a luminescence detection circuit; an electric switch; and battery protection means.

In certain embodiments, the control circuit is disposed within a storage compartment.

In certain embodiments, the apparatus further comprises a container for trapping insects wherein the container is located below the means for attracting insects.

In certain embodiments, the apparatus further comprises an insecticide holder wherein the holder is located below the means for attracting insects.

In certain embodiments, the apparatus further comprises means for orienting the solar panels.

In certain embodiments, the control circuit comprises further one or more diodes, the diodes been electrically connected between the solar panels and the battery.

In certain embodiments, the comparison circuit comprises an operational amplifier and the microprocessor; and an output signal of the operational amplifier is electrically transmitted to the microprocessor.

In certain embodiments, the battery is a lead-acid battery.

In certain embodiments, the means for trapping insects comprises a source of electromagnetic radiation.

In certain embodiments, the source of electromagnetic radiation emits radiation of single, multiple, or continuous wavelengths.

In certain embodiments, the source of electromagnetic radiation emits visible light radiation.

In certain embodiments, the source of electromagnetic radiation emits radiation having a wavelength of 365 nm or 480 nm.

In certain embodiments, the source of electromagnetic radiation is a cold cathode lamp.

In certain embodiments, the luminescence detection circuit comprises a photo sensor, the photo sensor being connected to the microprocessor; and the microprocessor controls the electric switch.

In certain embodiments, the timing circuit comprises a crystal oscillator, the crystal oscillator being able to output a clock signal to the microprocessor.

Many of the attendant advantages of the present invention will become more readily apparent and better understood as the following detailed description is considered in connection with the accompanying drawings in which:
Fig. 1 shows a cross-sectional diagram of a solar-panel powered apparatus for attracting and eliminating insects according to invention described herein;
Fig. 2 shows a component and process flow chart illustrating interactions between solar panels, battery, means for attracting insects and the microprocessor; and
Fig. 3 shows an electrical circuit diagram of a solar-panel powered apparatus for attracting and eliminating insects according to invention described herein.

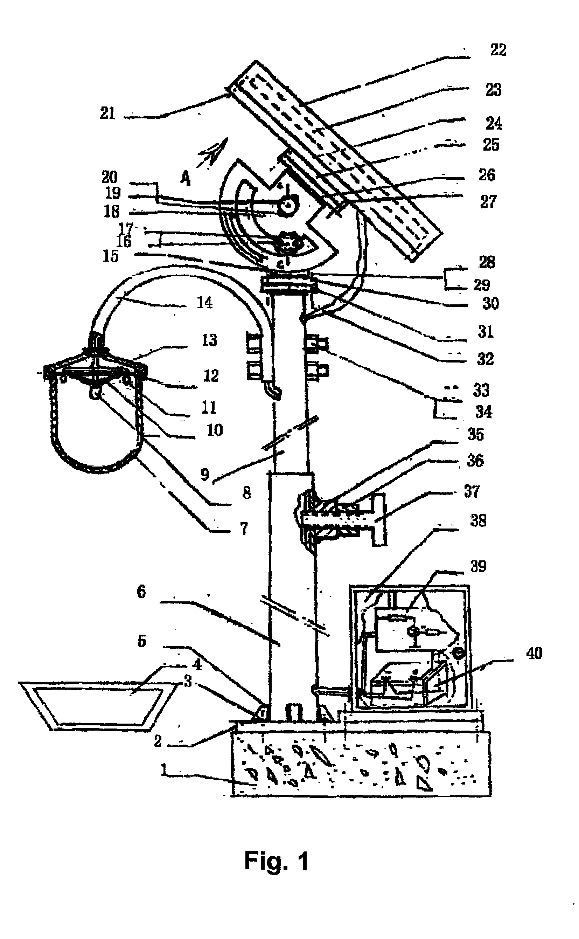

With reference to Fig. 1, one or more solar panels 23 are mechanically attached to a scaffold 22. The scaffold 22 is attached to a solar panel support board 24 by bolts 21. The solar panel support board 24 is connected to a first lip 26 of mounting bracket 18 via a support plate 25 by means of bolts 27. The adjustable mounting bracket 18 has an axis of rotation 19 coinciding with the bolt 20. In addition, an arcuate slot in the adjustable mounting bracket 18 cooperates with a bolt 16. The bolt 16 is provided with a nut 17, which when tightened can secure the bolt in place at any position within the arcuate slot and in doing so fix the corresponding elevation angle of the solar panel support board 24 and the solar panels 23 so as to maximize the amount of light received by the solar panels. This is to say that the mounting bracket 18 with the first lip 26, a vertical board 15 which has a second lip 30 and the bolts 16 and 20, form a means for orienting the solar panels 23.

The bolt 16 is mechanically connected to the vertical board 15 which has the second lip 30. A third lip 31 of an upper pipe 9 is bolted to the second lip 30 via bolts 28. The upper pipe 9 is inserted into a lower pipe 6 and fits snuggly therein by virtue of having a slightly smaller diameter. The upper pipe 9 is vertically movable within the lower pipe 6 and is fixed at a certain position within the lower pipe 6 by means of a bolt 37, a nut 35, and a locknut 36. To the upper pipe 9 is mechanically connected a lamp bracket 14 by bolts 33 and 34. The lower pipe 6 is connected to a base plate 2 by means of guard bolts 3 and reinforced nuts 5. The base plate 2 is connected also to a concrete slab which has been poured into the ground.

This type of design allows for a firm affixture of the apparatus to the ground. However, in alternative embodiments, the lower pipe 6 is directly inserted into the ground to a height suitable to provide stability. The pipe-in-pipe construction forming a frame also allows for an easy adjustment of height of light bulbs 8, 11 for attracting insects with respect to the ground and with respect to a container 4. Preferably, the distance between the light bulbs 8, 11 for attracting insects and the container 4 is about 300 mm. The container 4 forming means for trapping insects is filled with an insecticide and/or is an insect trap of a mechanical or a chemical type.

Referring further to Fig. 1, a lamp holder 13 is mechanically connected to the lamp bracket 14. A circuit bracket 12 is attached to the lamp holder 13. One or more light bulbs 8, 11 are connected to the circuit bracket 12. In certain embodiments, when more than one light bulb is employed, the light bulbs are arranged symmetrically with respect to the circuit bracket and/or are arranged circularly.

Light bulbs used to attract insects are near-UV light bulbs with 365 nm wavelength and/or blue-light bulbs with 480 nm wavelength; and/or cold-cathode bulbs, and/or any other sources of electromagnetic radiation suitable for this purpose. Specifically, different brightness and/or color of light may be utilized to attract insects.

For enhancing illumination, a reflector shade 10 is set between the lamp holder 13 and the light bulb 8 for attracting insects. In certain embodiments, the reflector shade 10 is attached directly to the lamp holder 13.

As further shown in Fig. 1, a storage battery 40 is disposed within a storage compartment 38. The battery 40 is electrically connected to the solar panels 23 which charge the battery 40 whenever the battery voltage drops below a certain level and whenever a sufficient amount of light shines onto the solar panels (i.e., during daytime rather than at night). Preferably the battery 40 is a sealed maintenance-free lead acid storage battery.

The control circuit is situated on a circuit board 39. The control circuit comprises a microprocessor, a comparison circuit, a timing circuit, a battery protection circuit, an electric switch, and a luminescence-detection circuit. The circuit board 39 is disposed at any suitable location without limitation to the location shown in Fig. 1.

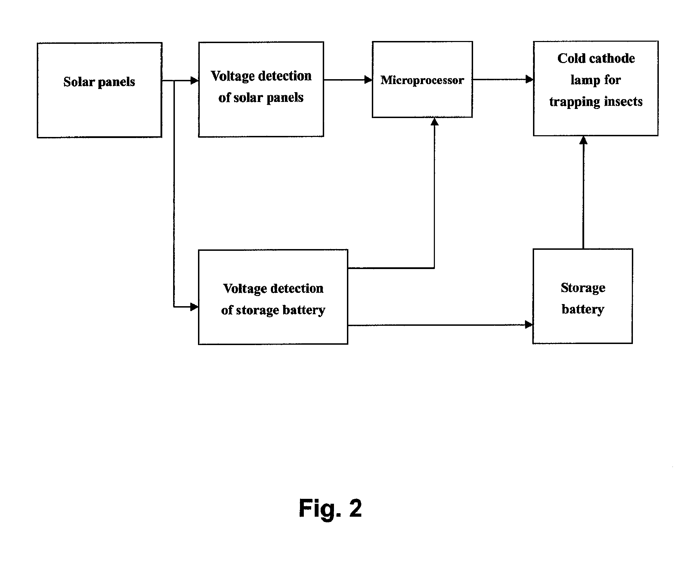

The basic principle of operation of one embodiment of the invention is shown in Fig. 2. Solar panels convert received solar radiation into electric energy. After the output voltage of the solar panels is ascertained and is suitable for charging, the storage battery is charged with electric energy supplied by the solar panels. The storage battery supplies electric energy to the light bulbs 8, 11 via an electric switch which is turned on by means of a microprocessor after the microprocessor detects a suitable operating voltage of the storage battery 40.

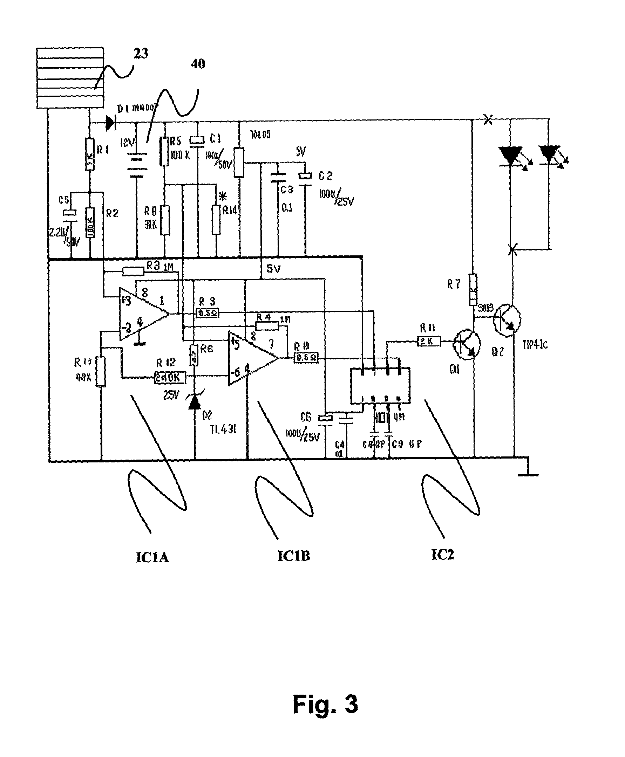

With reference to Fig. 3, solar panels 23 convert solar energy into electric energy. The battery 40 is charged by the solar panels 23 via a diode D1 which allows current to pass only in one direction. A potential between resistors R1, R2 and a capacitor C5 is sent to a comparison circuit. The comparison circuit comprises an operational amplifier IC1A and a microprocessor IC2.

A luminescence detection circuit is used for controlling the electric switch for turning on and off the light bulbs for attracting insects via a photo sensor. When the amount of incident light is lower than a preset value (e.g., at night), the photo sensor transmits voltage to microprocessor lC2, which in turn transmits low voltage to connected transistors Q1 and Q2, and as a result light bulbs for attracting insects are turned on. Whereas, when amount of incident light is higher than a preset value (e.g., during daytime), the microprocessor IC2 outputs a high electric potential to connected transistors Q1 and Q2, and as a result light bulbs for attracting insects are turned off. This is to say that the photo sensor together with the microprocessor and the transistors Q1, Q2 comprise a timing circuit.

The storage battery 40 supplies electric energy to the control circuit and the light bulbs for attracting insects through a constant voltage circuit. The electric potential between resistors R5 and R8 is transmitted to an operational amplifier IC1 B for comparison with the standard voltage at the output of the resistor R6 and the diode D2. The result of the comparison is transmitted to the microprocessor IC2 for analysis. When the voltage of the battery 40 is lower than a preset value, the microprocessor IC2 outputs a high electric potential to connected transistors Q1 and Q2 resulting in a switch off of the light bulbs for attracting insects so as to prevent overdischarge of the battery 40. This is also to say that transistors Q1 and Q2 act as an electric switch for the light bulbs for attracting insects and equally as a battery protection means.

The capacitors C8, C9 and a crystal oscillator form a timing oscillatory circuit, which supplies a clock signal to microprocessor IC2. Furthermore, resistors R7 and R11 limit voltage; resistors R9 and R10 limit current; and capacitors C1, C2, C3, C4 and C6 are filter capacitors used to filter out line disturbances from the control circuit.

Commercially available circuit components are readily used in embodiments of the present invention. For example, (1) 5W or 10W, amorphous silicon, monocrystaline or polycrystalline solar panels; (2) sealed maintenance-free lead acid SW640 batteries rated for 6V and 4A, and (3) light bulbs for attracting insects of the type CCFL-12V or CCFL-6V, are employed.

The solar-panel powered apparatus according to the present invention was tested in China's Henan province, where insect elimination rates were superior to conventional methods. In addition, the apparatus attracted and eliminated a wide variety of insects which could not be otherwise attracted and eliminated with any single conventional means. Not only a large variety but also a high number of beetles are attracted and eliminated at a ratio of 90% of all attracted insects being killed. Moreover, with a long life span and low maintenance, this invention can reduce the cost of killing insects in agricultural settings. Specifically, a better insect elimination rate per area of cropland can be attained with embodiments of this invention at a tenth of the expense as compared to methods using pesticides.

This invention is not to be limited to the specific embodiments disclosed herein and modifications for various applications and other embodiments are intended to be included within the scope of the appended claims. While this invention has been described in connection with particular examples thereof, the true scope of the invention should not be so limited since other modifications will become apparent to the skilled practitioner upon a study of the drawings, specification, and following claims.

All publications and patent applications mentioned in this specification are indicative of the level of skill of those skilled in the art to which this invention pertains. All publications and patent applications mentioned in this specification are herein incorporated by reference to the same extent as if each individual publication or patent application mentioned in this specification was specifically and individually indicated to be incorporated by reference.

## Claims

1. An apparatus for attracting and eliminating insects comprising
a frame;
means for attracting insects, said means for attracting insects being mechanically connected to said frame;
means for trapping insects;
a battery; and
one or more solar panels.

2. The apparatus of claim 1, further comprising a control circuit.

3. The apparatus of claims 1 or 2, wherein said control circuit comprises a microprocessor; a comparison circuit; a timing circuit; a luminescence detection circuit; an electric switch; and battery protection means.

4. The apparatus of any of claims 1-3, wherein said means for trapping insects comprises a container for trapping insects or an insecticide holder wherein said container or said insecticide holder is located below said means for attracting insects.

5. The apparatus of any of claims 1-4, further comprising means for orienting said solar panels.

6. The apparatus of claim 2, wherein said control circuit comprises further one or more diodes, said diodes been electrically connected between said solar panels and said battery.

7. The apparatus of claim 3, wherein said comparison circuit comprises an operational amplifier and said microprocessor; and an output signal of said operational amplifier is electrically transmitted to said microprocessor.

8. The apparatus of claim 1, wherein said means for trapping insects comprises a source of electromagnetic radiation emitting radiation of single, multiple, or continuous wavelengths, for example, a cold cathode lamp.

9. The apparatus of claim 3, wherein said luminescence detection circuit comprises a photo sensor, said photo sensor being connected to said microprocessor; and said microprocessor controls said electric switch.

10. The apparatus of claim 3, wherein said timing circuit comprises a crystal oscillator, said crystal oscillator being able to output a clock signal to said microprocessor.
